(19)

Europäisches Patentamt

European Patent Office

Office européen des brevets

(11) **EP 4 142 086 A1**

(12) **EUROPEAN PATENT APPLICATION**

(43) Date of publication:
**01.03.2023 Bulletin 2023/09**

(21) Application number: **21192808.0**

(22) Date of filing: **24.08.2021**

(51) International Patent Classification (IPC):
**H02J 3/00** *(2006.01)*  **H02J 13/00** *(2006.01)*

(52) Cooperative Patent Classification (CPC):
**H02J 13/00002; H02J 3/00;** H02J 2203/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Sanayi ve Ticaret A. S.**
**34870 Istanbul (TR)**

(72) Inventors:
• **Cinalioglu, Mustafa Cihan**
  **06520 Ankara (TR)**

• **Dursun, Erk**
  **06810 Ankara (TR)**
• **Eser, Fatih**
  **06370 Ankara (TR)**
• **Göl, Murat**
  **06810 Ankara (TR)**
• **Yilmaz, Ugur**
  **06370 Ankara (TR)**

(74) Representative: **Maier, Daniel Oliver**
**Siemens AG**
**Postfach 22 16 34**
**80506 München (DE)**

(54) **METHOD FOR DETERMINING THE OPTIMAL MEASUREMENT PLACEMENT IN A POWER GRID**

(57)    Computer-implemented method for determining the optimal measurement placement at a power grid, **characterized by** following steps:

a) Providing the system topology (SysT) of the power grid with respective measurement means for flow and/or injection measurements at predefined measurement locations of the power grid,

b) Detecting ring branches and radial structures of the branches using the system topology (SysT) and the predefined measurement locations (ML),

c) Detect boundary injections (BI),

d) Construct a H2-matrix,

e) Perform a strategical ordering (SO1, SO2) for ring and radial structures separately and obtain an augmented matrix from the H2-matrix,

f) Calculate a branch observability vector by setting vector values for branches,

g) Multiply the system topology (SysT) and the branch observability vector,

h) Find pseudo measurements for observability (FPM) to make unobservable branches observable as the optimal measurement placement at the power grid.

FIG 5

**EP 4 142 086 A1**

**Description**

The invention relates to a computer-implemented method for determining the optimal measurement placement at a power grid, which comprises a root and buses connected by branches.

Moreover, the invention relates to a computer program, an electronically readable data carrier and a data carrier signal.

In developing countries, because of the lack of a proper real-time monitoring system at distribution power networks, topology error processing cannot be performed.

Traditional radial structure does not suffer because of this problem while in the presence of open-ring structure, this issue constitutes a risk for the operation of the system and safety of the field staff in contact with the system components.

In many systems, available measurements are utilized in a topology identification process based on graph theoretic methods, which are known to be computationally inefficient.

Power system topology identification and measurement placement are active research areas.

Previous works employ different methods to identify the power grid topology.

State estimation and statistical methods such as maximum likelihood with analog measurements have been used in the art.

In addition to the conventional analog measurements, there are also approaches utilizing special instruments such as harmonic synchro-phasor measurements.

Recent works demonstrate learning-based methods and Mixed-Integer Linear Programming (MILP) are also useful for power grid topology analysis.

MILP approaches often use line measurements and nodal pseudo-measurements. Granted the independent rings are calculated by graph algorithms, a placement algorithm considering pseudo-measurements is applied. An impedance and topology learning algorithm can be applied using only time-stamped terminal measurements.

Moreover, graphical methods are used in the art to find topology and sensor placement in deterministic and stochastic cases.

MILP utilizes the polynomial order of spanning trees to find out the exact topology, which can utilize a graph method based on spanning tree to solve the placement problem.

Moreover, zero injection buses for the optimal placement of Phasor Measurement Units (PMUs) are used in the art.

The drawback in the state of the art is that it is assumed either that there are enough measurements in the topology or pseudo-measurements which are good enough to rely on.

Unfortunately, measurements and pseudo-measurements are neither available nor reliable in practice, especially in developing countries.

Thereby, most methods are not applicable to real world situations where distribution system is not monitored properly.

In addition, prior art does not consider a meshed operation which is not theoretically expected but may exist in practice.

Moreover, the time complexity of algorithms used to extract independent meshed structures is not practical for large networks.

Although there are studies that analyze distribution systems with tens of buses, studies based on partitioning of distribution systems with a few thousands of buses is not present in the literature.

The invention aims to find the identifiable branches, i.e. branches whose status can be identified uniquely, and presents the optimum location of the measurement devices that is required to satisfy full identifiability.

A modern power grid includes transmission and distribution systems.

Redundant measurement devices and availability of Supervisory Control and Data Acquisition (SCADA) system make the transmission topology identifiable, despite the meshed structure of transmission grid.

On the other hand, there is a lack of measurement devices at the distribution level because of the conventional radial structure of the system makes it difficult to identify the topology.

Because of the utilization of ring structures with open-ring operation, and penetration of distributed energy resources; knowing the real-time topology of the system has gained importance in the recent years.

The invention proposes a numerical method for an analysis to identify or determine of the system topology.

The invention can provide a minimum number of measurements and their locations which are required to make the system fully identifiable, i.e. all branch status will be uniquely identifiable.

Distribution system topology determination or identification can be crucial in terms of safety, operation, and protection.

A limited number of measurements as well as a lack of real-time monitoring can hinder identifiability and the proper localization of energized segments can be difficult.

A grid can be operated incorrectly sometimes, e.g. in a ring structure, which can cause some lines to get energized even though they should not be.

Such incorrect operation can create both operational difficulties and safety issues.

Moreover, a protection system may fail if the settings are not updated properly considering the current topology.

Moreover, state estimation cannot be performed with incorrect topology causing loss of control over the network.

These problems can arise in operation, safety and protection increase with the popularization of advent technologies in the grid.

Such technologies as photovoltaic generations and electric vehicles may require real-time monitoring and control which depend on the topology identification.

Considering those, topology identification at distribution has the utmost importance.

Traditionally, graph theoretic methods have been used for the topology identification problem at distribution systems.

As the size of the distribution systems can be as large as tens of thousands of buses, most graphical approaches will fail to converge in a reasonable time.

Although there are reduced computational complexity approaches known in the art, they have been applied to small sized graphs, and no practical results are presented for real distribution systems.

Especially in the presence of injection measurements, i.e. smart meter measurements of large loads as hospitals, shopping malls, universities, and industrial customers, the problem gains a combinatorial nature.

The invention aims to process the topology of the distribution system considering the available measurements to yield the identifiable branches.

The proposed method is superior in terms of computational performance compared to the conventional graphical based methods.

A modified version of the method can be applied for a partitioning strategy, which identifies the radial connected branches.

The method according to the invention can partition the radial and ring structures and processes them separately.

Utilization of the proposed method also reveals the optimal sensor placement to achieve full topology identifiability.

In the literature, there are measurement placement algorithms to fulfill the system observability for state estimation applications. However, those methods utilize a test matrix where each candidate pseudo injection measurement is assumed to be inserted to system, then the optimality of the candidate is assessed using the test matrix. On the other hand, the placement algorithm given in this work determines the optimal placement locations using a direct method. In the proposed method, the optimal placement locations are obtained while conducting the identifiability analysis without any further analysis.

The objective of the invention is to provide to determine the optimal measurement placement at a distribution power grid in an efficient way.

The objective of the invention is solved by a method according to the main claim, comprising following steps:

a) Providing the system topology of the power grid with respective measurement means for flow and/or injection measurements at predefined measurement locations of the power grid,

b) Detecting ring branches and radial structures of the branches using the system topology and the predefined measurement locations,

c) Detect boundary injections, which are injection measurements at respective busses incident to both radial and ring structures,

d) Construct a H2-matrix, which transforms the injection measurements to the flows of branches for extracted ring and radial structures as a part of an identifiability analysis,

e) Perform a strategical ordering for ring and radial structures separately and obtain an augmented matrix from the H2-matrix,

f) Calculate a branch observability vector by setting vector values for branches, where observable branches are zero, and others are non-zero with unique integers,

g) Multiply the system topology and the branch observability vector,

h) Find pseudo measurements for observability, preferably in the result vector of step g) by identifying non-zero elements therein, to make unobservable branches observable as the optimal measurement placement at the power grid.

The method applies a specialized strategical ordering methodology and incomplete Cholesky factorization to provide an efficient method to perform identifiability analysis.

Details on the strategical ordering are shown below, in particular in the section of equation (4).

Moreover, by applying the invention a sensor placement algorithm allows to restore topology identifiability, by a solution to find uniquely identifiable switch status in a computationally efficient manner.

Prior art mostly does not consider the network size and does not provide an analysis on computational burden.

The preprocessing method for ring detection significantly decreases the computation time.

Briefly, the invention has following advantages:

- A high-performance algorithm for identifiability analysis of topology,
- An efficient measurement placement algorithm to obtain identifiability,
- Acceleration of the cycle basis algorithms for faster operation based on the proposed ring detection method,
- Computational performance and run-time results of the proposed methods.

The principle of the invention comprises a computationally efficient numerical identifiability analysis of the distribution system.

In a further development of the invention, before the step d), a Jacobi-Matrix with injection measurements from the power grid is settled.

By this, a linearized relationship between injection measurements and states is obtained, which simplifies the processing at all.

The objective of the invention is also solved by a computer program, comprising instructions which, when executed by a computer, cause the computer to carry out the method according to the invention.

The objective of the invention is also solved by an electronically readable data carrier with readable control information stored thereon, which comprises at least one computer program according to the invention and is designed in such a way that, when the data carrier is used in a computing device, a method according to invention is performed.

The objective of the invention is also solved by a data carrier signal, which the computer program according to invention transmits.

The invention is explained in more detail below with reference to an exemplary embodiment shown in the accompanying drawings. In the drawings shows:

Fig. 1a    an example of a radial grid topology,

Fig. 1b    an example of a ring grid topology,

Fig. 2    an example of a mixed grid topology,

Fig. 3    an example for an algorithm for detecting a radial topology,

Fig. 4    an example for an algorithm for identifying a grid topology,

Fig. 5    a flowchart of the method according to the invention,

Fig. 6    an example of a mixed grid topology with identified power injection measurements according to the method of the invention,

Fig. 7    an illustration of the run-time improvement by ring system detection and extraction,

Fig. 8    an illustration of a test feeder input according to IEEE-33,

Fig. 9    an illustration of a test feeder output according to IEEE-33,

Fig. 10    an illustration of the run-time behavior based on the input size data.

The method comprises an analysis, which yields to identifiable and non-identifiable branches of the distribution network where a branch is defined as identifiable if the switch status of that branch can be identified uniquely.

Moreover, optimal measurement device placement algorithm to ensure full system identifiability is given.

Next, assessment of the boundary injection measurements is performed and finally, the optimal measurement placement to restore full identifiability is revealed.

Additionally, optimum pseudo injection measurement locations are determined efficiently to be used in real-time applications like state estimations.

A. Formation of Jacobian Matrix

Jacobian Matrix defines the linearized relationship between injection measurements and states. Rows of the formed matrix represent the measurements while columns stand for states. Each element of Jacobian matrix corresponds to partial derivative of measurement with respect to the states.

B. Detection of the Ring Structure

For the detection of the ring structures in a graph, there are various methods, e.g., graph search methods.

Knowing the fact that the number of nodes of the distribution systems of the metropolitan areas might be greater than the number of nodes of a transmission network of a country, search algorithm becomes computationally expensive due to the combinatorial nature.

Thus, the invention proposes a numeric method with strategic ordering to improve computational performance. Aim of the numerical method is to detect all the buses forming a ring.

Having the relation between the measurements and system states (line flows), one can estimate the system states as given below.

$$z = H \cdot x + e \qquad (1)$$

$$\hat{x} = (H^T \cdot H)^{-1} \cdot H^T \cdot z \qquad (2)$$

wherein

$z$     Measurement vector ($n \times 1$)
$x$     System true state vector ($n \times 1$), where the system states are defined as the line flows
$e$     measurement error vector ($n \times 1$),
$\hat{x}$     estimated system states vector ($n \times 1$)
$H$     Jacobian matrix ($n \times b$)
$n$     number of buses
$b$     number of branches

If one can uniquely calculate the value of a line flow by means of equation (2), it means that the status of that line can be known uniquely as well.

Consequently, it can be said that a gain matrix $G = H^T \cdot H$ reveals the uniquely identifiable branch status. The proposed ring detection method utilizes this knowledge.

For ring detection, it is assumed that all busbars are energized, which means there are non-zero measurements. These measurements are modelled as constant pseudo-measurements without a need for profile. More clearly, all bus measurements are assumed to be one unit.

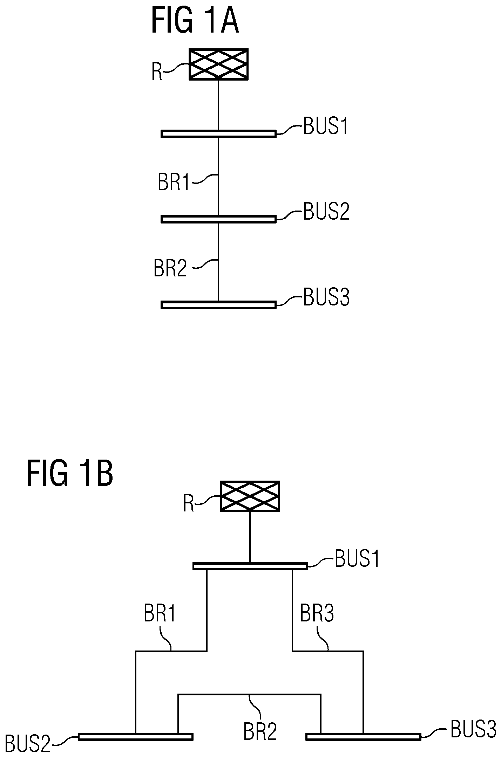

Consider the radial structure seen in **Fig. 1a** with a root R and buses BUS1-BUS3, which are connected by branches BR1, BR2 (the root R is connected with bus BUS1 by a branch), and the corresponding Jacobian matrix $H_{rad}$ given in equation (3).

$$H_{rad} = \begin{bmatrix} 1 & 0 \\ -1 & 1 \\ 0 & -1 \end{bmatrix} \text{ and } H_{ring} = \begin{bmatrix} 1 & 0 & 1 \\ -1 & 1 & 0 \\ 0 & -1 & -1 \end{bmatrix} \qquad (3)$$

The injections at the leaf nodes will be equal to the power flows incident to those nodes, which yields linearly independent rows at $G_{rad} = H_{rad}^T \cdot H_{rad}$.

Having those linearly independent rows, one can see that the reduced row echelon form of $G_{rad}$ is an identity matrix, such that all rows of $G_{rad}$ are linearly independent.

A ring structure $(G_{ring} = H_{ring}^T \cdot H_{ring})$ a root R and buses BUS1-BUS3 according to **Fig. 1b** does not have any linearly independent row on the other hand. The buses BUS1-BUS3 are connected by branches BR1-BR3 and the root R is connected with bus BUS1 by a branch.

Provided that there exists no interruption in the considered distribution system and assumed that there is an injection measurement at each node of the considered distribution system, and there is no flow measurement, it can be said that the branches corresponding to linearly dependent rows of gain matrix constitute a ring.

The matrix that defines the relation between the system states, namely the branch flows, and virtual bus injection measurements will be defined as $H_1$.

Linearly independent rows of the $G_1 = H_1^T \cdot H_1$ matrix correspond to the branches that do not form a ring. Hence, the aim is to find linearly independent rows of $G_1$. Therefore, computationally efficient approach based on incomplete Cholesky factorization is proposed.

Firstly, strategical ordering is performed while forming the $H_1$ matrix. At the leaf node, injection measurement equals to flow measurement on the incident branch. This means, in the Jacobian Matrix, the rows, have only one non-zero terms, represent the power injection measurements of the leaf buses. Using this information, ordering of the $H_1$ matrix can be as shown in equation (4).

$$H_1 = \begin{bmatrix} 1 & 0 \\ Y & H_{en} \end{bmatrix} \qquad (4)$$

In equation (4), identity matrix $I$ corresponds to the virtual injection measurements at the leaf buses.

Note that non-zero elements of sub-matrix $Y$ can be replaced by zeros trivially as they are linear combinations of the entries of matrix $I$. This can be proved via the basic row operations. There is no need for any actual operation, and the Y can be automatically assigned as a zero matrix. Note that as $I$ matrix becomes larger, size of $H_{en}$ becomes smaller.

Therefore, the rest of the measurements are represented by the sub-matrix $H_{en}$. Once the non-zero entries of matrix $Y$ are replaced by zeros, number of non-zero entries at some rows of Hen may become one, and hence, another identity matrix can be obtained by re-ordering matrix $H_{en}$.

This iterative ordering will continue until there are no rows containing only one non-zero term. This process enables to disregard the branches incident to leaf buses of the graph and removes the corresponding columns from Hen sub-matrix. Note that at this stage no trace algorithm is run, rather the $H_1$ matrix is re-ordered.

Having equation (4), it can be said that the branches represented inside I matrix do not form any ring whereas linearly dependent rows of $G_{en} = H_{en}^T \cdot H_{en}$ matrix correspond to the branches forming rings.

To determine linearly independent rows of the Gen matrix, incomplete Cholesky factorization is utilized instead of taking row reduced echelon form due to computational performance constraints, as the well-known numerical observability analysis.

Considering the states represented inside identity matrix of $H_1$ are linearly independent, only $G_{en}$ will be investigated to obtain linearly independent and dependent states.

The linear relation between measurements corresponding to $H_{en}$ and corresponding states, can be constructed as follows.

$$z_{en} = H_{en} \cdot x_{en} + e_{en} \qquad (5)$$

Thus, branch flows, and hence the switch status of the branches can be estimated as follows.

$$(H_{en}^T \cdot H_{en})^{-1} \cdot \hat{x}_{en} = H_{en}^T \cdot z_{en} \qquad (6)$$

$$G_{en} \cdot \hat{x}_{en} = t_{en} \qquad (7)$$

Assume that $z_{en}$ is a vector of zeros. If the $G_{en}$ is non-singular, such that all branch status can be identified uniquely, the state vector, $x_{en}$ will also be a vector of zeros trivially.

If $G_{en}$ is singular, i.e., status of some branches is not uniquely identifiable, then one will encounter zero-pivots during the Cholesky factorization of $G_{en}$.

Presence of those zero-pivots disables the factorization. As stated by the incomplete Cholesky factorization, when a zero-pivot encountered, it will be replaced by 1, and corresponding entry of $t_{en}$ vector will be assigned an integer number in increasing order and starting at 1 which was initially 0.

At the end of the incomplete Cholesky factorization, obtained lower triangular, $L'_{en}$, will be used to get updated non-singular gain matrix, $G'_{en}$.

Equation (7) will be solved using $G'_{en}$ and $t_{en}$. In the end, the non-zero entries of $\hat{x}_{en}$ reveals the branches whose status cannot be identified uniquely, and hence constitutes a ring in the topology.

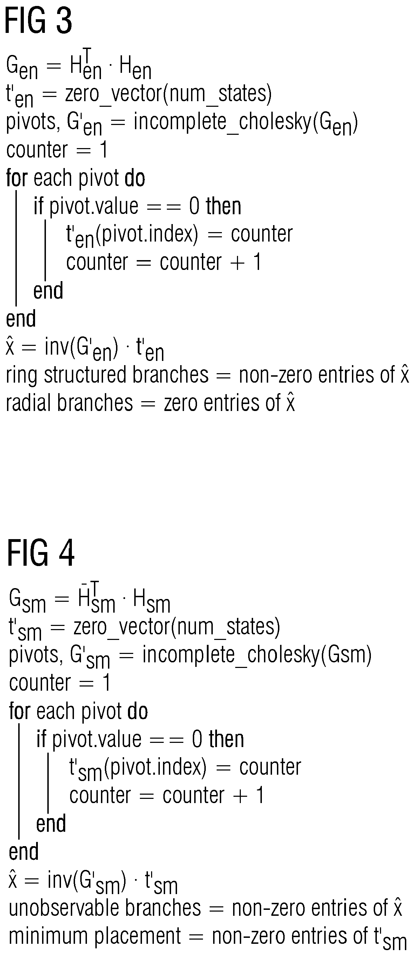

The Algorithm shown in **Fig. 3** presents the proposed algorithm for detecting a radial structure within a grid topology.

Note that, at this stage the proposed method aims to determine the branches that forms a ring, not the rings itself. The proposed method conducts identifiability analysis of radial and ring structures separately.

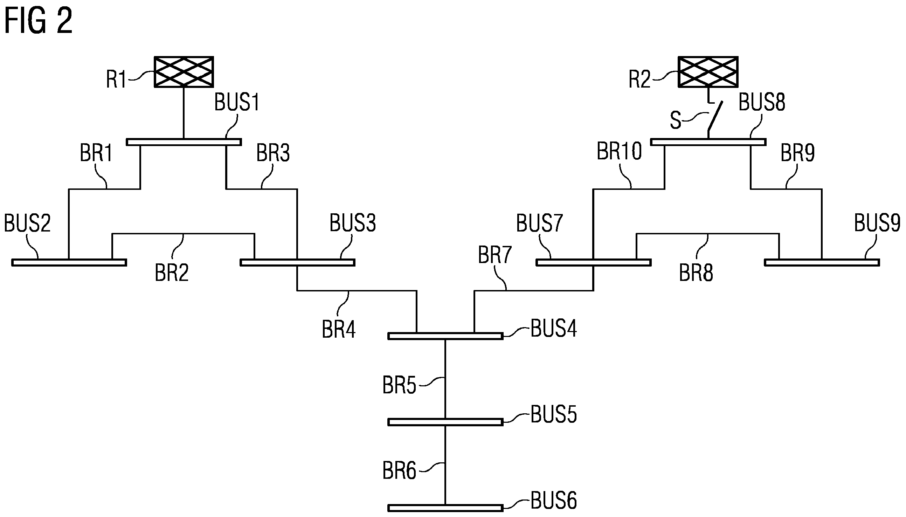

To clarify the methodology better, the proposed method is employed at the system shown in **Fig. 2,** in which buses BUS1-BUS9 and branches BR1-BR10 are shown.

The buses BUS1 and BUS8 have transmission network connections to the roots R1, R2, respectively.

When the switch S is open, it is expected to obtain Branches BR1, BR2, BR3 and BR8, BR9, BR10 are revealed as ring operating branches whereas Branches BR1, BR2, BR3, BR4, BR7, BR8, BR9 and BR10 are expected to be obtained as ring operating branches when the switch is closed.

Note that all the matrices are given in full matrix formation to give better visualization

When the switch S is open, the matrix $H$ is formed as shown below in **Table 1.** As strategical ordering proceeds, row 6, which has only one non-zero term is replaced with row 1, and column 6 is replaced with column 1.

Matrix $H'$ is the result of first iteration, shown in **Table 2.** The elements in column 1 except first row can be equalized to zero as linear combination of first row with any row yields zero elements in the first column.

Similarly, matrix $H''$ is obtained in the second iteration, shown in **Table 3.** Sub-matrix $I$ is composed of two elements for this system as there are no rows containing only one non-zero term in $H_{en}$ sub-matrix as shown in **Table 2** as marked region with the dashed border.

Table 1: Matrix H

| $H$ | BR1 | BR2 | BR3 | BR4 | BR5 | BR6 | BR7 | BR8 | BR9 | BR10 |
|---|---|---|---|---|---|---|---|---|---|---|
| BUS 1 | -1 | 0 | -1 | 0 | 0 | 0 | 0 | 0 | 0 | 0 |
| BUS 2 | 1 | -1 | 0 | 0 | 0 | 0 | 0 | 0 | 0 | 0 |
| BUS 3 | 0 | 1 | 1 | -1 | 0 | 0 | 0 | 0 | 0 | 0 |
| BUS 4 | 0 | 0 | 0 | 1 | -1 | 0 | -1 | 0 | 0 | 0 |
| BUS 5 | 0 | 0 | 0 | 0 | 1 | -1 | 0 | 0 | 0 | 0 |
| BUS 6 | 0 | 0 | 0 | 0 | 0 | 1 | 0 | 0 | 0 | 0 |
| BUS 7 | 0 | 0 | 0 | 0 | 0 | 0 | 1 | -1 | 0 | -1 |
| BUS 8 | 0 | 0 | 0 | 0 | 0 | 0 | 0 | 0 | -1 | 1 |
| BUS 9 | 0 | 0 | 0 | 0 | 0 | 0 | 0 | 1 | 0 | 0 |

Table 2: Matrix $H'$

| $H'$ | **BR6** | BR2 | BR3 | BR4 | BR5 | **BR1** | BR7 | BR8 | BR9 | BR10 |
|---|---|---|---|---|---|---|---|---|---|---|
| **BUS6** | 1 | 0 | 0 | 0 | 0 | 0 | 0 | 0 | 0 | 0 |
| BUS2 | 0 | -1 | 0 | 0 | 0 | 0 | 0 | 0 | 0 | 0 |
| BUS3 | 0 | 1 | 1 | -1 | 0 | 0 | 0 | 0 | 0 | 0 |
| BUS4 | 0 | 0 | 0 | 1 | -1 | 0 | -1 | 0 | 0 | 0 |
| BUS5 | 0 | 0 | 0 | 0 | 1 | 0 | 0 | 0 | 0 | 0 |
| **BUS1** | 0 | 0 | 1 | 0 | 0 | -1 | 0 | 0 | 0 | 0 |
| BUS7 | 0 | 0 | 0 | 0 | 0 | 0 | 1 | -1 | 0 | -1 |
| BUS8 | 0 | 0 | 0 | 0 | 0 | 0 | 0 | 0 | -1 | 1 |

(continued)

| H' | BR6 | BR2 | BR3 | BR4 | BR5 | BR1 | BR7 | BR8 | BR9 | BR10 |
|---|---|---|---|---|---|---|---|---|---|---|
| BUS9 | 0 | 0 | 0 | 0 | 0 | 0 | 0 | 1 | 1 | 0 |

Table 3: Matrix $H''$ and $H_{en}$ (right 7x8 region)

| H" | BR6 | BR5 | BR3 | BR4 | BR2 | BR1 | BR7 | BR8 | BR9 | BR10 |
|---|---|---|---|---|---|---|---|---|---|---|
| **BUS6** | 1 | 0 | 0 | 0 | 0 | 0 | 0 | 0 | 0 | 0 |
| **BUSS** | 0 | 1 | 0 | 0 | 0 | 0 | 0 | 0 | 0 | 0 |
| BUS3 | 0 | 0 | 1 | -1 | 1 | 0 | 0 | 0 | 0 | 0 |
| BUS4 | 0 | 0 | 0 | 1 | 0 | 0 | -1 | 0 | 0 | 0 |
| **BUS2** | 0 | 0 | 0 | 0 | -1 | 1 | 0 | 0 | 0 | 0 |
| **BUS1** | 0 | 0 | -1 | 0 | 0 | -1 | 0 | 0 | 0 | 0 |
| BUS7 | 0 | 0 | 0 | 0 | 0 | 0 | 1 | -1 | 0 | -1 |
| BUS8 | 0 | 0 | 0 | 0 | 0 | 0 | 0 | 0 | -1 | 1 |
| BUS9 | 0 | 0 | 0 | 0 | 0 | 0 | 0 | 1 | 1 | 0 |

With the strategical ordering, buses BUS5 and BUS6, which are radial structures with no transmission network connections are removed from the system.

Thus, symmetrical $G_{en}$ (8×8) matrix is formed using $H_{en}$ (7×8). Cholesky factorization of $G_{en}$ yields $L'_{en}$ where zero pivots are changed to 1, and t vector is modified as shown below.

Table 4: Matrix $L'_{en}$

| | | | | | | | |
|---|---|---|---|---|---|---|---|
| 1.414 | 0 | 0 | 0 | 0 | 0 | 0 | 0 |
| -0.707 | 1.225 | 0 | 0 | 0 | 0 | 0 | 0 |
| 0.707 | -0.408 | 1.155 | 0 | 0 | 0 | 0 | 0 |
| 0.707 | 0.408 | -1.155 | 1 | 0 | 0 | 0 | 0 |
| 0 | -0.816 | -0.289 | 0 | 1.118 | 0 | 0 | 0 |
| 0 | 0 | 0 | 0 | -0.894 | 1.095 | 0 | 0 |
| 0 | 0 | 0 | 0 | 0 | 0.913 | 1.08 | 0 |
| 0 | 0 | 0 | 0 | -0.894 | 0.183 | -1.08 | 1 |

Table 5: Vector $t_{en}$

| |
|---|
| 0 |
| 0 |
| 0 |
| 1 |
| 0 |
| 0 |
| 0 |
| 2 |

Solving equation (7) by means of the incomplete Cholesky factorization will yield the following $\hat{x}_{en}$.

As seen below, the values corresponding to Branches 4 and 7 are zero.

Having Branches 5 and 6 are already marked as radial, all the radial branches are detected.

Note that for the given sample system, the method may not be advantageous over search algorithms.

However, considering a distribution system with even a few ten-thousand buses, the proposed method provides higher efficiency.

Table 6: Vector $\hat{x}_{en}$

| BR3 | BR4 | BR2 | BR1 | BR7 | BR8 | BR9 | BR10 |
|-----|-----|-----|-----|-----|-----|-----|------|
| -1 | 0 | 1 | 1 | 0 | -2 | 2 | 2 |

C. System Identifiability Analysis and Measurement Device Placement for Identifiability

Identifiability analysis is used to identify branches which are observable (whose status can be uniquely identified) considering the available measurements.

Similar to the ring detection, the main idea is to construct a $H_2$ matrix defined in equation (8), which relates the available actual measurements to the flows of branches.

$H_2$ is formed as $H_1$, and similarly I and $H_{sm}$ have the same formation as I and $H_{en}$ of equation (4).

On the contrary of $H_1$, it is not guaranteed that there exists at least one measurement incident to each branch. Therefore, $H_2$ can be partitioned into six sub-matrices.

The zero-sub-matrices at the rightmost of the matrix correspond to the branches that are not incident to any measurement. Therefore, they can be trivially disregarded from identifiability analysis.

$$\boldsymbol{z} = H_2 \cdot x = \begin{bmatrix} z_{SW_1} \\ z_{SW_2} \\ \vdots \\ z_{SW_m} \\ z_{node_1} \\ z_{node_2} \\ \vdots \\ z_{node_n} \end{bmatrix} = \begin{bmatrix} 1 & 0 & 0 \\ 0 & H_{sm} & 0 \end{bmatrix} \begin{bmatrix} x_{SW_1} \\ x_{SW_2} \\ \vdots \\ x_{SW_e} \end{bmatrix} \qquad (8)$$

$H_{sm}$ is to be examined since the other sub-matrices denote the status of corresponding branches without any further analyze. The relation between the measurements and branch flows can be given as follows for the corresponding elements of $H_{sm}$.

A second algorithm shown in **Fig. 4**, which is an embodiment for a method for identifying a grid topology.

The result is one or more observable branch(es) and minimum placement branches to have observable topology.

The task of the algorithm is to form a $H_2$ matrix and to calculate $H_{sm}$.

$$z_{sm} = H_{sm} \cdot x_{sm} \qquad (9)$$

$$H_{sm}^T \cdot H_{sm} \cdot \hat{x}_{sm} = H_{sm}^T \cdot z_{sm} \qquad (10)$$

$$G_{sm} \cdot \hat{x}_{sm} = t_{sm} \qquad (11)$$

The incomplete Cholesky factorization of $G_{sm}$ explained before is utilized again in the identifiability analysis. The results of the factorization yield $t_{sm}$ vector and ($\hat{x}_{sm}$ = inv($G'_{sm} \cdot t_{sm}$).

As stated in the second algorithm, non-zero entries of $x$ correspond to non-identifiable states which are non-identifiable branch status whereas non-zero elements of $t_{sm}$ vector correspond to minimum placement locations for the sub system of $H_{sm}$.

The proposed method finds non-identifiable branch status and minimum placement locations by incomplete Cholesky factorization which improves computational performance significantly.

In order to fully identify the complete network, device placement is the last step providing the most economical placement locations for the devices. Thanks to the incomplete Cholesky method, non-zero values in the t matrix given in equation (10) yield the branches that require flow measurement placement.

In addition, measurement devices should be placed to the branches corresponding to the zero-sub-matrices at the righthand-side of $H_2$ in equation (8), as those branches have no incident measurements.

D. Optimal Pseudo Measurement for Real-time Application

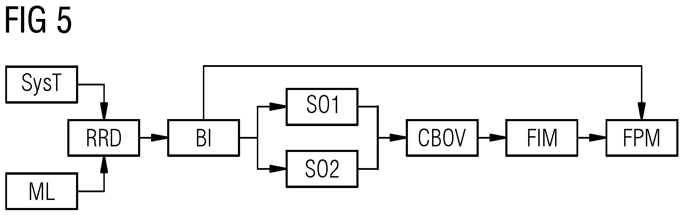

A flow chart of the proposed method is given in Fig. 5.

A predefined system topology SysT and predefined measurement locations ML are provided to the method.

Ring/ Radial Detection RRB is performed to extract ring and radial structures using the system topology SysT and the predefined measurement locations ML.

The succeeding step "Find Boundary Injections and Ignore" BI is used to localize boundary busbars and to "ignore" boundary injection measurements in the further processing.

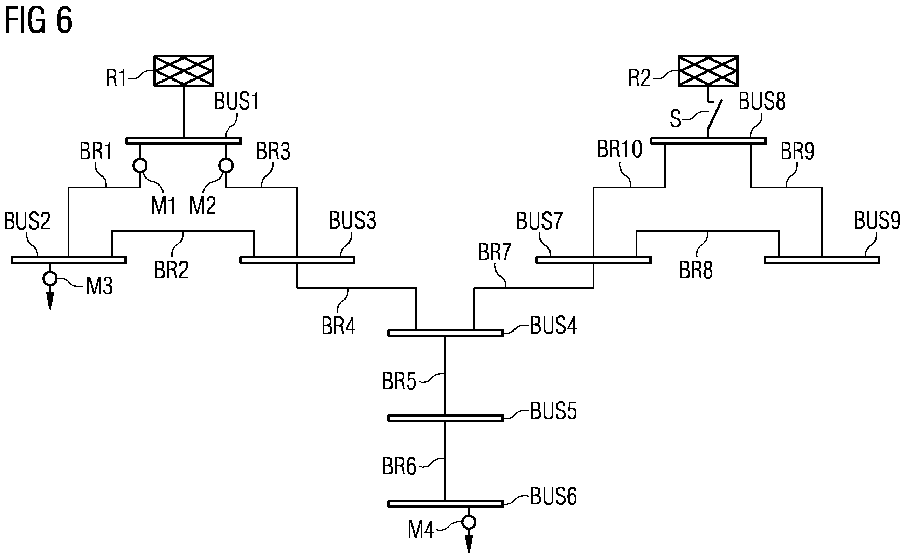

However, it is important to keep them for further usage. Note that, a boundary injection is defined as an injection measurement at a bus which is incident to both radial and ring structures, power injection measurements PIM are given in Fig. 6.

In particular, power injection measurements M1-M4 at respective branched BR1, BR3 and busses BUS2 and BUS6 are shown in Fig. 6.

For extracted ring and radial structures, $H_2$(which is used in identifiability analysis and related actual measurements and branch flows) is constructed.

In parallel, strategical ordering SO1 and SO2, which is explained in previous sections, is applied for ring and radial structures separately. Then the result is the augmented $H_2$ matrix. $H_{sm}$ part and zero-sub-parts at the rightmost of augmented $H_2$ matrix shows us what unobservable branches are.

Optimum pseudo injection measurement locations are needed to make unobservable branches observable which are identified in previous step. Also, to achieve this, a branch vector is required, which is created at the step "Create Branch Observability Vector" CBOV.

The branch vector includes values for all branches where observable branches are zero, while others are non-zero with unique integers according to Table 7.

Table 7: Matrix of system topology SysT

| SysT | BR1 | BR2 | BR3 | BR4 | BR5 | BR6 | BR7 | BR8 | BR9 | BR10 |
|------|-----|-----|-----|-----|-----|-----|-----|-----|-----|------|
| BUS1 | 1   |     | 1   |     |     |     |     |     |     |      |
| BUS2 | -1  | 1   |     |     |     |     |     |     |     |      |
| BUS3 |     | -1  | -1  | 1   |     |     |     |     |     |      |
| BUS4 |     |     |     | -1  | 1   |     | 1   |     |     |      |
| BUS5 |     |     |     |     | -1  | 1   |     |     |     |      |
| BUS6 |     |     |     |     |     | -1  |     |     |     |      |
| BUS7 |     |     |     |     |     |     | -1  | 1   |     | 1    |
| BUS8 |     |     |     |     |     |     |     |     | 1   | -1   |
| BUS9 |     |     |     |     |     |     |     | -1  | -1  |      |

Therefore, in order to find optimum pseudo injection measurement locations, the system topology SysT and the branch vector BOV are multiplied as depicted at Table 8.

This is performed at a next step "Find Injection Measurements to Observe Unobservable Branches" FIM, in which the system topology SysT and the branch vector BOV are multiplied.

Then, the step of determining "Find Pseudo Measurements for Observability" FPM is executed, which delivers the optimum pseudo measurements to obtain observability, i.e., to make unobservable branches observable.

Table 8: Branch Vector BOV

| |
|---|
| 0 |
| 1 |
| 0 |
| 2 |
| 3 |
| 0 |
| 4 |
| 5 |
| 6 |
| 7 |

Non-zero entries or elements of the result vector shows where measurements must be located, as shown in Table 9.

Table 9: Measurement Locations

| |
|---|
| 0 |
| 1 |
| 1 |
| 5 |
| -3 |
| 0 |
| 8 |
| -1 |
| -11 |

It is necessary to compare stored boundary injection measurement locations and locations in result vector. Except one location of difference between these two vectors are the places where pseudo injection measurements must be located.

Simulations:

The efficiency of the proposed method is demonstrated using four independent tests. Simulations use both IEEE 33 bus system and a real distribution system. The medium voltage lines are initially extracted, and the low voltage system is discarded. All experiments run over the test hardware 2 x Intel(R) Xeon(R) CPU E5-2650 v4 @ 2.20GHz with 64GB RAM.

Test Case I

Test case I presents the performance improvement provided by the proposed ring detection method on the minimum cycle basis MCB example.
For the test, different sub-systems of the employed real distribution system are utilized, with randomly located measurements.

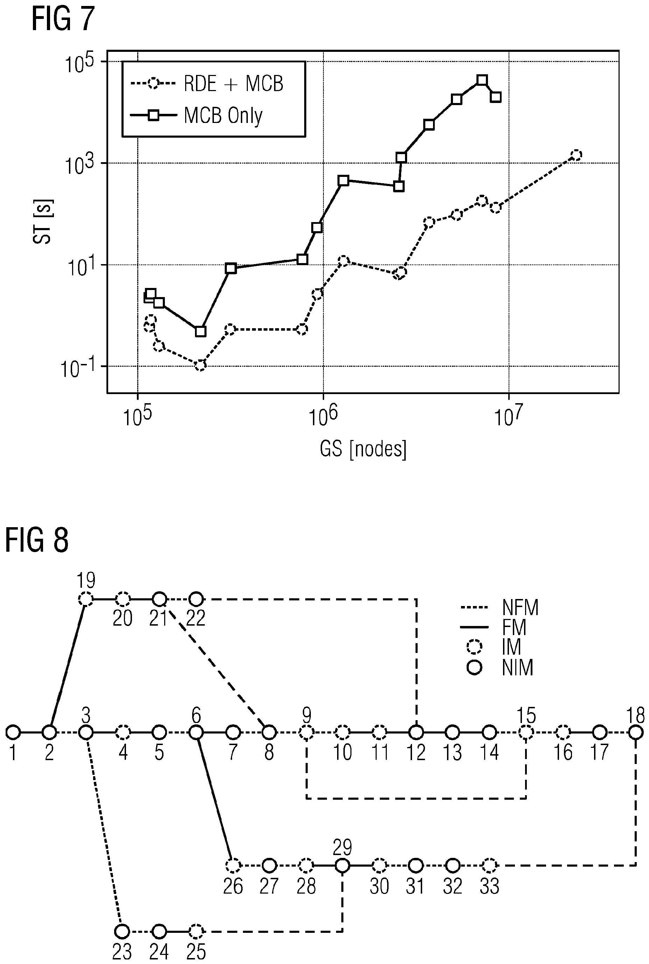

**Fig. 7** illustrates the run time comparison in a logarithmic scale for

(i) minimum cycle basis MCB applied to the whole system, and
(ii) ring system detection and extraction (RDE) followed by minimum cycle basis MCB.

Each test is repeated 5 times, and the average is given in the Fig. 6, which shows the solution time ST in seconds over the graph size GS in nodes.

Standard deviations of all runs are less than 3%, and large networks have lower deviations.

Experiments show that the proposed ring detection method is much faster compared to the conventional graph-based methods. Elimination of the radial structure simplifies the network and makes it easier to run MCB algorithm.

Test Case II

Test case II presents the method performance on a real 8477 bus system. Table 10 demonstrates the topology details and performance results.

Table 10: 8477 Bus Distribution System Results

| Property | Value |
| --- | --- |
| Num. Buses | 8477 |
| Num. Rings | 22 |
| Num. Branches | 8498 |
| RDE | 59.25 s |
| IMP | 0.36 s |
| Num. Non-identifiable Branches | 535 |
| Num. Non-identifiable Rings | 22 |
| Num. Sensors Placed for Complete Identifiability | 502 |

The total time required is approximately one minute, and the method performance is measured in two distinct phases. The first phase, ring system detection and extraction RDE, is the simplification, which partitions the radial and ring structures. The final phase presents the solution of minimum placement problem as well as giving identifiability analysis result (IMP).

Note that the ring system detection and extraction RDE is a one-time-job. As long as the system structure and available measurements are not changed, it is not required to re-run. Therefore, only the IMP will be running during the operation of the distribution system.

Test Case III

Test III presents the practical results of the proposed method on IEEE 33 bus system.

**Fig. 8** shows the IEEE 33 bus system with measurement locations which are randomly generated with probability 0:3. There are 5 independent rings and 1 radial branch.

The graph shows no-flow measurements NFM, flow measurements FM, injection measurements IM and no-injection measurements NIM.

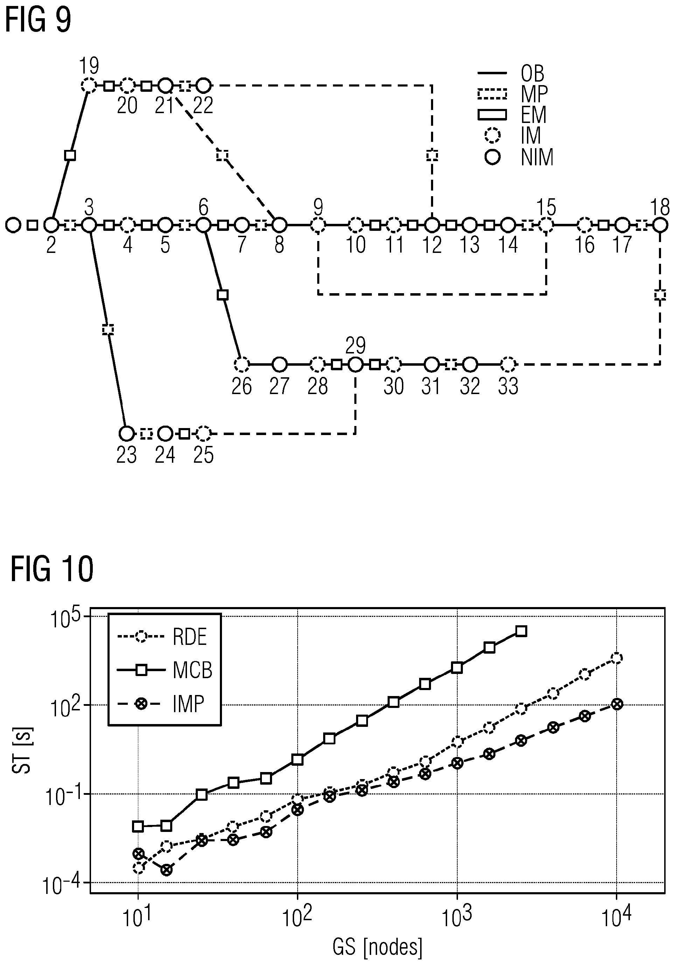

**Fig. 9** gives the result of identifiability analysis and minimum sensor placement.

Experimentally, the test run under 1:63 ms and 1:87 ms for minimum placement and radial structure detection, respectively.

The graph shows observable branches OB, measurements placed MP, existing measurements EM, injection measurements IM and no-injection measurements NIM.

Test Case IV

Test IV shows the algorithm performance on various graph-sizes generated by Newman-Watts-Strogatz smallworld-graph with parameters $k = 4$ and $p = 0:15$, and the results are visualized in **Fig. 10**, which shows the solution time ST in seconds over the graph size GS in nodes. The test benchmarks the RDE, MCB and IMP on the eliminated graph.

Each test result comprises the average of 5 test runs and the average time is computed. The results are in log-scale which provides finer visualization.

The Tests I and IV reveal that despite the use of MCB for the whole distribution network is impractical, after the ringed structure is detected MCB becomes practical. One can use MCB to further partition the system as removal of the radial branches may yield multiple decoupled ring structures, which may be assessed separately.

In this invention, a numerical method for identifiability analysis of distribution system is presented. The method provides a computationally efficient solution compared to the conventional graph-theoretical methods.

The proposed ring detection method will be utilized only if the structure of the system is changed, e.g., a new transformer is penetrated to the system. Therefore, the solution of this part is not time critical. Note that this partitioning method can also be applied to any other graph-based topology analysis, e.g., performance of ring identification can be improved significantly by the means of the proposed method as seen in the case studies.

The proposed identifiability analysis has a very high computational performance and can be utilized in real-time applications as well. Thanks to the proposed data structure, effect of inclusion of a new measurement or outage of a device can be reflected to the results efficiently.

**List of reference numerals:**

| | |
|---|---|
| BI | Find boundary injections and ignore |
| BOV | Branch observability vector |
| BR1-BR10 | Identifiable and non-identifiable branches |
| BUS1-BUS9 | Bus |
| CBOV | Create branch observability vector |
| EM | Existing measurement |
| FM | Flow measurement |
| FIM | Find injection measurements to observe unobservable branches |
| FPM | Find pseudo measurements for observability |
| GS | Graph size |
| IM | injection measurement |
| IMP | identifiability analysis result |
| MCB | minimum cycle basis |
| ML | Measurement locations |
| MP | measurement placed |
| M1-M4 | Measurement |
| NFM | No flow measurement |
| NIM | no injection measurement |
| OB | observable branch |
| PFM | power flow measurement |
| PIM | power injection measurement |
| R, R1, R2 | root |
| RDE | Ring system detection and extraction |
| RRD | Ring/ radial detection |
| SO1, SO2 | Strategical ordering |
| ST | Solution time |
| SysT | Solution topology |

**Claims**

1. Computer-implemented method for determining the optimal measurement placement (OMP) at a power grid, which comprises a root (R, R1, R2) and buses (BUS1-BUS9) connected by branches (BR1-BR10), **characterized by** following steps:

   a) Providing the system topology (SysT) of the power grid with respective measurement means (PIM, PFM) for flow and/or injection measurements at predefined measurement locations of the power grid,
   b) Detecting ring branches and radial structures of the branches (BR1-BR10) using the system topology (SysT) and the predefined measurement locations (ML),
   c) Detect boundary injections (BI), which are injection measurements at respective busses (BUS1-BUS9) incident to both radial and ring structures,
   d) Construct a H2-matrix ($H_2$), which transforms the injection measurements to the flows of branches (BR1-BR10) for extracted ring and radial structures as a part of an identifiability analysis,
   e) Perform a strategical ordering (SO1, SO2) for ring and radial structures separately and obtain an augmented matrix from the H2-matrix,

f) Calculate a branch observability vector (BOV) by setting vector values for branches, where observable branches are zero, and others are non-zero with unique integers,

g) Multiply the system topology (SysT) and the branch observability vector (BOV),

h) Find pseudo measurements for observability (FPM) in the result vector of step g) by identifying non-zero elements therein to make unobservable branches observable as the optimal measurement placement (OMP) at the power grid.

2. Method of the preceding claim, wherein before the step d), a Jacobi-Matrix with injection measurements from the power grid is settled.

3. Computer program, comprising instructions which, when executed by a computer, cause the computer to carry out the method according to one of the preceding claims.

4. Electronically readable data carrier with readable control information stored thereon, which comprises at least one computer program according to the preceding claim and is designed in such a way that, when the data carrier is used in a computing device, a method according to one of claims 1 to 2 is performed.

5. Data carrier signal, which the computer program according to claim 3 transmits.

# FIG 1A

# FIG 1B

FIG 2

# FIG 3

$G_{en} = H_{en}^T \cdot H_{en}$

$t'_{en} = \text{zero\_vector(num\_states)}$

$\text{pivots}, G'_{en} = \text{incomplete\_cholesky}(G_{en})$

$\text{counter} = 1$

**for** each pivot **do**

    **if** pivot.value $==$ 0 **then**

        $t'_{en}(\text{pivot.index}) = \text{counter}$

        $\text{counter} = \text{counter} + 1$

    **end**

**end**

$\hat{x} = \text{inv}(G'_{en}) \cdot t'_{en}$

ring structured branches $=$ non-zero entries of $\hat{x}$

radial branches $=$ zero entries of $\hat{x}$

# FIG 4

$G_{sm} = \bar{H}_{sm}^T \cdot H_{sm}$

$t'_{sm} = \text{zero\_vector(num\_states)}$

$\text{pivots}, G'_{sm} = \text{incomplete\_cholesky}(G_{sm})$

$\text{counter} = 1$

**for** each pivot **do**

    **if** pivot.value $==$ 0 **then**

        $t'_{sm}(\text{pivot.index}) = \text{counter}$

        $\text{counter} = \text{counter} + 1$

    **end**

**end**

$\hat{x} = \text{inv}(G'_{sm}) \cdot t'_{sm}$

unobservable branches $=$ non-zero entries of $\hat{x}$

minimum placement $=$ non-zero entries of $t'_{sm}$

FIG 5

FIG 6

EP 4 142 086 A1

FIG 7

FIG 8

FIG 9

FIG 10

Europäisches Patentamt

European Patent Office

Office européen des brevets

# EUROPEAN SEARCH REPORT

Application Number

EP 21 19 2808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EXPSITO A G ET AL: "Generalized observability analysis and measurement classification", POWER INDUSTRY COMPUTER APPLICATIONS., 1997. 20TH INTERNATIONAL CONFER ENCE ON COLUMBUS, OH, USA 11-16 MAY 1997, NEW YORK, NY, USA, IEEE, US, 11 May 1997 (1997-05-11), pages 97-103, XP010227907, DOI: 10.1109/PICA.1997.599383 ISBN: 978-0-7803-3713-8 * the whole document * | 1-5 | INV. H02J3/00 H02J13/00 |
| A | PETER J KATSIKAS ET AL: "Unified Observability Analysis and Measurement Placement in Generalized State Estimation", IEEE TRANSACTIONS ON POWER SYSTEMS, IEEE, USA, vol. 18, no. 1, 1 February 2003 (2003-02-01), XP011079284, ISSN: 0885-8950 * the whole document * | 1-5 | |
| A | BILGEHAN DONMEZ ET AL: "A Computationally Efficient Method to Place Critical Measurements", IEEE TRANSACTIONS ON POWER SYSTEMS, IEEE, USA, vol. 26, no. 2, 1 May 2011 (2011-05-01), pages 924-931, XP011354591, ISSN: 0885-8950, DOI: 10.1109/TPWRS.2010.2066582 * the whole document * | 1-5 | |

TECHNICAL FIELDS SEARCHED (IPC)

H02J

-/--

The present search report has been drawn up for all claims

| Place of search | Date of completion of the search | Examiner |
|---|---|---|
| Munich | 19 January 2022 | Zettler, Karl-Rudolf |

EPO FORM 1503 03.82 (P04C01)

Europäisches
Patentamt

European
Patent Office

Office européen
des brevets

# EUROPEAN SEARCH REPORT

Application Number

EP 21 19 2808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BEI GOU ET AL: "An Improved Measurement Placement Algorithm for Network Observability", IEEE TRANSACTIONS ON POWER SYSTEMS, IEEE, USA, vol. 16, no. 4, 1 November 2001 (2001-11-01), XP011051203, ISSN: 0885-8950 * the whole document * ----- | 1-5 | |

TECHNICAL FIELDS
SEARCHED (IPC)

The present search report has been drawn up for all claims

| Place of search | Date of completion of the search | Examiner |
|---|---|---|
| Munich | 19 January 2022 | Zettler, Karl-Rudolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)